# EUROPÄISCHE PATENTSCHRIFT

(11) **EP 1 194 701 B1**
(45) Veröffentlichungstag und Bekanntmachung des Hinweises auf die Patenterteilung: **11.02.2004**
(21) Anmeldenummer: 00947774.6
(22) Anmeldetag: 03.06.2000
(51) Int. Cl.: F16C 3/22, F04B 1/04, F04B 9/04

(54) **NADELLAGER UND PUMPENEINHEIT MIT EINEM NADELLAGER**
NEEDLE BEARING AND PUMP UNIT COMPRISING A NEEDLE BEARING
ROULEMENT A AIGUILLES ET UNITE DE POMPE EQUIPEE D'UN ROULEMENT A AIGUILLES

(30) Priorität: 22.06.1999 DE 19928480
(43) Veröffentlichungstag der Anmeldung: 10.04.2002
(73) Patentinhaber: ROBERT BOSCH GMBH, 70442 Stuttgart (DE)
(72) Erfinder: BITZER, Harold, D-77815 Buehl (DE); EIGENMANN, Joerg, D-76149 Karlsruhe (DE); BRAUN, Wilhelm, D-77815 Bühl (DE); BAREISS, Alexander, D-87509 Immenstadt (DE)
(86) Internationale Anmeldenummer: PCT/DE2000/001815
(87) Internationale Veröffentlichungsnummer: WO 2000/079144

(56) Entgegenhaltungen:
- EP-A- 0 539 849
- EP-A- 0 637 690
- DE-A- 4 433 972
- DE-A- 19 636 508
- DE-A- 19 706 124
- DE-A- 19 720 615
- DE-A- 19 827 653
- DE-A- 19 830 890
- DE-A- 19 839 430
- DE-A- 19 840 048
- US-A- 5 801 467

## Beschreibung

Die Erfindung geht aus von einer Pumpeneinheit mit einem Nadellager nach der Gattung des Patentanspruchs 1.

Aus DE 197 06 124 A1 ist eine Pumpeneinheit mit einem elektrischen Antriebsmotor bekannt, welcher eine auf einer feststehenden Achse gelagerte Hohlwelle aufweist. Mit der Hohlwelle ist eine exzentrische Hülse als Innenring eines Nadellagers drehfest verbunden. An einem Außenring des Nadellagers greifen Pumpenkolben einer Radialkolbenpumpe an. Zwischen dem Innenring und dem Außenring sind in einem Käfig Nadeln aufgenommen. Der Außenring ist an seinen beiden Stirnseiten jeweils mit einem radial nach innen gerichteten Bord versehen. Während ein Bord des Außenringes zur Sicherung der axialen Lage von Nadeln und Außenring über eine Stirnfläche des Innenringes greift, endet der andere Bord, lediglich die Nadeln übergreifend, vor dem Innenring des Nadellagers. Aufgrund dieser Ausgestaltung vermag sich der Außenring des Nadellagers in einer Richtung axial zu verlagern, was zu Funktionsstörungen der Pumpeneinheit führen kann.

Aus DE 197 20 615 C1 ist eine gattungsgemäße Pumpeneinheit mit einem Nadellager bekannt. Die Pumpeneinheit hat einen elektrischen Antriebsmotor, dessen Welle in eine exzentrisch ausgebildete Hülse eines Bauteils drehmomentübertragend eingreift. Die Hülse ist motorseitig und motorabgewandt mit jeweils einem Wälzlager in einem Pumpenblock gelagert, an den auch der Motor angebaut ist. Die Hülse trägt unmittelbar benachbart zum motorseitigen Wälzlager ein Nadellager. Dabei dient die Hülse als Innenring des Nadellagers, dessen in einem Käfig aufgenommene Nadeln eine Nadelbüchse als Außenring tragen. An dem Außenring greifen Pumpenkolben an, welche radial zur Achse der Motorwelle im Pumpenblock aufgenommen sind. Der Außenring des Nadellagers ist an seinen beiden Stirnseiten mit einem radial nach innen gerichteten Bord versehen, welche die Nadeln stirnseitig übergreifen. Um die axiale Lage von Nadeln und Außenring auf dem Innenring sicherzustellen, ist ein Bord des Außenrings zum spielbehafteten Angriff an der Stirnfläche des Innenrings des motorseitigen Wälzlagers vorgesehen. Auf der Seite des motorabgewandten Wälzlagers ist dagegen ein an die exzentrische Hülse angeformter Bund ausgebildet, an den der andere Bord des Außenrings anlaufen kann. Aufgrund dieser Gestaltung ergeben sich jedoch Nachteile: Wegen des Bundes weisen die beiden Wälzlager einen relativ großen Abstand auf, und der Bund erfordert eine kostenaufwendige Zerspanung oder Umformung des die Hülse aufweisenden Bauteils. Da der motorseitige Bord der Nadelbüchse stirnseitig völlig eben ausgebildet ist, besteht außerdem die Gefahr, daß er im verschleißbedingten Kontakt mit einer Lagerdeckscheibe des motorseitigen Wälzlagers Schäden verursacht.

Es ist aus DE 44 33 972 A1 bekannt, bei einer Pumpeneinheit einen Endabschnitt einer Motorwelle als Exzenter auszubilden, auf dem die Nadeln eines Nadellagers unmittelbar abwälzen. Der Außenring, an dem ein Pumpenkolben einer Radialkolbenpumpe angreift, weist an beiden Stirnseiten jeweils einen die Nadeln übergreifenden Bord auf. Mit einem Bord ist der Außenring an dem Innenring eines unmittelbar benachbarten Wälzlagers der Motorwelle abgestützt, dem anderen Bord ist eine Anlauffläche an einer Stufe einer Bohrung in einem Pumpenblock zugeordnet, um das Nadellager axial zu stützen. Bei dieser Ausführungsform ist nachteilig, daß die Anlauffläche in aufwendiger Weise verschleißmindernd behandelt werden muß.

Ferner ist es aus EP 0 637 690 A1 bekannt, bei einer Pumpeneinheit mit einer Radialkolbenpumpe eine Exzenterhülse auf eine Motorwelle aufzupressen, welche wiederum ein als Radial-Rillenkugellager ausgebildetes Wälzlager mit Preßsitz trägt, an dessen Außenring ein Pumpenkolben angreift. Da ein derartiges Wälzlager selbsthaltend ist, sind Maßnahmen zur Sicherung der axialen Lage seines Außenrings nicht erforderlich.

### Vorteile der Erfindung

Die erfindungsgemäße Pumpeneinheit mit den Merkmalen des Patentanspruchs 1 ist insofern vorteilhaft, als mit geringem Aufwand eine Selbsthaltung des Nadellagers auf der Welle des Antriebsmotors dadurch erzielt wird, daß der Außenring aufgrund von Formschluß seines Bordes zwischen den beiden mit Kraftschluß auf der Welle befestigten Innenringen von Nadellager und Wälzlager geführt ist. Ein weiteres Führungselement oder eine Anlauffläche für den Außenring ist nicht erforderlich, was neben Kostenvorteilen zu einer axialen Verkürzung der Gesamtanordnung führt, die dann wiederum eine kompakte und kostengünstige Gestaltung des Pumpenblocks ermöglicht. Außerdem wird aufgrund der Gestaltung des Innenringes des Nadellagers als Exzenter die Fertigung der Motorwelle verbilligt und eine hohe Biegesteifigkeit der Welle erhalten.

Durch die im Anspruch 2 aufgeführte Maßnahme wird eine flächenmäßig definierte Berührung zwischen dem Bord des Außenrings des Nadellagers und dem Innenring des Wälzlagers vorgegeben. Die Kröpfung oder Ausstülpung verhindert ein Anlaufen des Bordes gegen eine Lagerdeckscheibe des Wälzlagers und deren Verschleiß. Mit der Kröpfung oder Ausstülpung wird ein Werkstoffvolumen zur Verfügung gestellt, welches sich während der Lebensdauer der Pumpeneinheit verschleißbedingt reduzieren kann. Schäden am Nadellager oder Wälzlager werden dadurch vermieden.

### Zeichnung

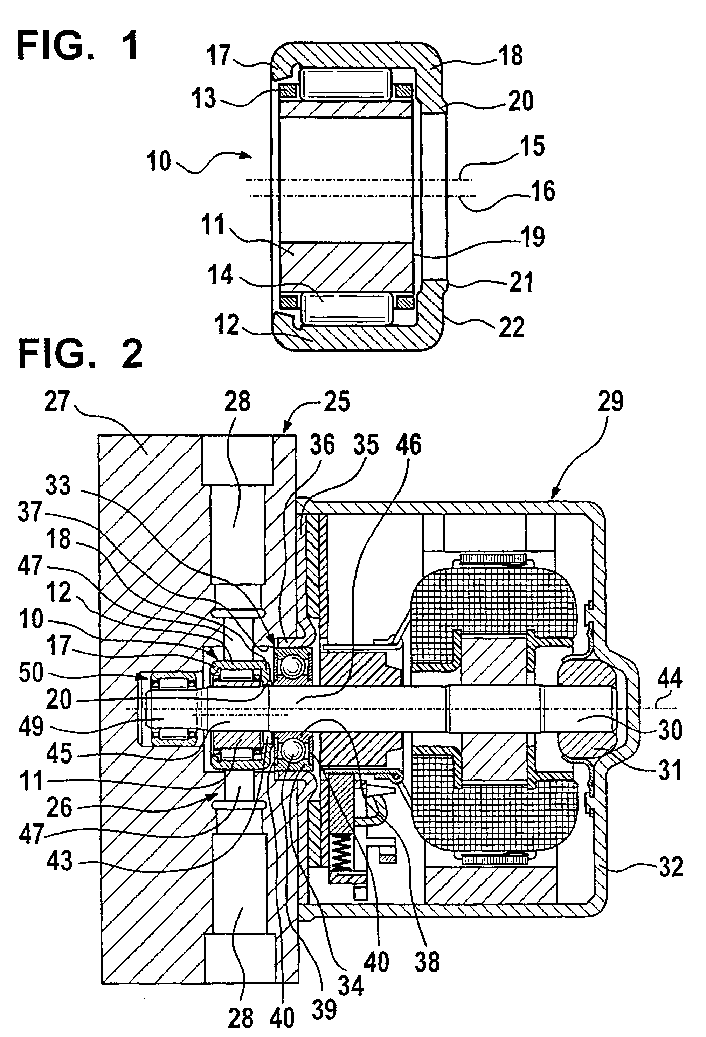

Ein Ausführungsbeispiel der Erfindung ist in der Zeichnung vereinfacht dargestellt und in der nachfolgenden Beschreibung näher erläutert. Es zeigen Figur 1 ein Nadellager im Schnitt und Figur 2 einen Längsschnitt einer Pumpeneinheit mit einem Nadellager nach Figur 1.

### Beschreibung des Ausführungsbeispiels

Ein in Figur 1 der Zeichnung geschnitten dargestelltes Nadellager 10 weist einen Innenring 11, einen Außenring 12 sowie zwischen dem Innenring und dem Außenring aufgenommene, in einem Käfig 13 geführte Nadeln 14 auf. Der Innenring 11 ist als exzentrische Hülse mit einer Achse 15 ausgebildet. Der Außenring 12 hat eine Achse 16 und ist in Form einer Nadelbüchse gestaltet. Der Außenring 12 ist an seinen beiden Stirnseiten mit einem radial nach innen gerichteten Bord 17 und 18 versehen. Der Bord 17 weist eine geringe radiale Breite auf und übergreift lediglich die Nadeln 14. Der Bord 18 hat dagegen eine größere radiale Breite und greift über eine Stirnfläche 19 des Innenrings 11. Der Bord 18 erreicht nahezu den Innendurchmesser des Innenrings 11 dort, wo dieser seine geringste Wandstärke besitzt. An seinem Innenrand hat der Bord 18 eine axiale, von der Stirnfläche 19 des Innenrings 11 weggerichtete Kröpfung oder Ausstülpung 20. Die Kröpfung oder Ausstülpung 20 bildet einen konzentrisch zur Achse 16 des Außenrings verlaufenden Werkstoffwulst, welcher eine vom Innenring 11 abgewandte Stirnfläche 22 des Bordes 18 überragt und in einer Stirnfläche 21 endet, die parallel zur Stirnfläche 22 verläuft. Durch den Übergriff des Bordes 18 über den Innenring 11 wird ein Halt von Außenring 12, Käfig 13 und Nadeln 14 auf dem Innenring 11 in einer Achsrichtung erzielt.

Eine in Figur 2 der Zeichnung im Längsschnitt dargestellte Pumpeneinheit 25 ist zur Verwendung in schlupfgeregelten hydraulischen Fahrzeug-Bremsanlagen bestimmt. Die Pumpeneinheit 25 weist eine Radialkolbenpumpe 26 mit zwei in einem Pumpenblock 27 angeordneten Pumpenelementen 28 auf. An den Pumpenblock 27 ist ein elektrischer Antriebsmotor 29 der Radialkolbenpumpe 26 angebaut. Der Antriebsmotor 29 hat eine Welle 30, welche mit ihrem pumpenblockabgewandten Ende in einem Gleitlager 31 gelagert ist. Das in einem Gehäuse 32 des Antriebsmotors 29 abgestützte Gleitlager 31 bildet ein Loslager für die Welle 30. Pumpenblockseitig ist die Welle 30 in einem Wälzlager 33 in der Form eines Radial-Rillenkugellagers gelagert. Ein Außenring 34 des Wälzlagers 33 sitzt mit Preßsitz in einem Gehäusedeckel oder Flansch 35 des Gehäuses 32. Ein den Außenring 34 des Wälzlagers 33 umfangsseitig umschließender Bund 36 des Gehäusedeckels 35 greift in eine abgestufte Bohrung 37 des Pumpenblocks 27 ein. Ein Innenring 38 des Wälzlagers 33 ist mit Preßsitz auf der Welle 30 des Antriebsmotors 29 gehalten. Die Kugeln 39 sind an beiden Stirnseiten des Wälzlagers 33 durch Lagerdeckscheiben 40 abgedeckt. Das Wälzlager 33 ist ein Festlager der Welle 30.

Unmittelbar benachbart zu dem Wälzlager 33 ist auf der Welle 30 des Antriebsmotors 29 das anhand von Figur 1 beschriebene Nadellager 10 angeordnet. Der Innenring 11 des Nadellagers 10 ist unter Belassen eines Spaltes zum Innenring 38 des Wälzlagers 33 auf die Welle 30 des Antriebsmotors 29 aufgepreßt. Dabei fällt die Achse 15 des Nadellagers 10 mit der Achse 44 der Welle 30 zusammen. Der Durchmesser des das Nadellager 10 aufnehmenden Wellenabschnitts 45 ist nur geringfügig gegenüber dem sich vom Wälzlager 33 zum Gleitlager 31 erstreckenden Abschnitt 46 der Welle 30 verringert. Diese weist daher eine hohe Biegesteifigkeit auf. An dem Außenring 12 des Nadellagers 10 greifen mantelseitig in einer rechtwinklig zur Wellenachse 44 verlaufenden Ebene oszillierend bewegbare Pumpenkolben 47 der Pumpenelemente 28 der Radialkolbenpumpe 26 an. Das Nadellager 10 ist in einer Weise auf der Welle 30 angeordnet, daß der radial breitere Bord 18 in den Spalt 43 zwischen dem Innenring 11 des Nadellagers 10 und dem Innenring 38 des Wälzlagers 33 mit geringem axialen Spiel eingreift. Damit ist ein Halt des Außenringes 12 des Nadellagers 10 in beiden Achsrichtungen erzielt. Das vom Spiel des Bordes 18 im Spalt 43 zugelassene geringfügige axiale Wandern des Außenringes 12 wird auf der einen Seite vom Innenring 11 des Nadellagers 10 und auf der anderen Seite vom Innenring 38 des Wälzlagers 33 begrenzt. Dabei gelangt lediglich die Stirnfläche 21 der Kröpfung oder Ausstülpung 20 am Bord 18 in Kontakt mit dem Innenring 38 des Wälzlagers 33. Die nadellagerseitige Lagerdeckscheibe 40 des Wälzlagers 33 wird vom Bord 18 nicht berührt. Während der Lebensdauer der Pumpeneinheit 25 stellt die Kröpfung oder Ausstülpung 20 ein dem Verschleiß ausgesetztes Werkstoffvolumen zur Verfügung. Der solcherart erzielte Halt des Außenringes 12 macht eine pumpenblockseitige Anlauffläche überflüssig. Darüber hinaus gestattet es diese Lösung das Nadellager 10 in relativ geringem axialen Abstand zum Wälzlager 33 anzuordnen, so daß die von den Pumpenkolben 47 hervorgerufenen und auf das Nadellager 10 wirkenden Kräfte nur eine geringe Durchbiegung der Welle 30 und demzufolge eine verminderte Geräuschentwicklung der Pumpeneinheit 25 bewirken.

Die Welle 30 des Antriebsmotors 29 ist an ihrem pumpenblockseitigen Endabschnitt 49 mit einem weiteren Nadellager 50 in der Bohrung 37 des Pumpenblocks 27 gelagert. Hierdurch ist die Durchbiegung der Welle 30 zusätzlich verringert. Das Nadellager 50 bildet ein zweites Loslager der Welle 30.

## Patentansprüche

1. Pumpeneinheit (25), insbesondere für schlupfgeregelte hydraulische Fahrzeug-Bremsanlagen, mit einer Radialkolbenpumpe (26) mit mindestens einem Pumpenkolben (47) in einem Pumpenblock (27), mit einem an den Pumpenblock (27) angebauten Antriebsmotor (29), mit einer vom Antriebsmotor (29) antreibbaren Welle (30), welche wenigstens mittelbar einen Innenring (38) eines Wälzlagers (33) durchgreift und unmittelbar benachbart zu diesem ein Nadellager (10) trägt, das einen als exzentrische Hülse ausgebildeten Innenring (11) und einen Außenring (12) in Form einer Nadelbüchse sowie Nadeln (14) zwischen Innenring (11) und Außenring (12) aufweist,wobei der Außenring (12) an seinen beiden Stirnseiten jeweils mit einem radial nach innen gerichteten Bord (17, 18) versehen ist, von denen einer zum Angriff am Innenring (38) des Wälzlagers (33) vorgesehen ist, während der Pumpenkolben (47) der Radialkolbenpumpe (26) am Mantel des Außenrings (12) des Nadellagers (10) angreift, **dadurch gekennzeichnet, daß** der Innenring (11) des Nadellagers (10) ebenso wie der Innenring (38) des Wälzlagers (33) auf die Welle (30) aufgepreßt sind und daß lediglich der zum Angriff am Innenring (38) des Wälzlagers (33) vorgesehene Bord (18) des Außenrings (12) des Nadellagers (10) zur Sicherung der axialen Lage von Nadeln (14) und Außenring (12) über eine Stirnfläche (19) des Innenringes (11) greift, wobei dieser Bord (18) in einen Spalt zwischen den Innenringen (11, 38) von Nadellager (10) und Wälzlager (33) greift.

2. Pumpeneinheit nach Anspruch 1, **dadurch gekennzeichnet, daß** der die Stirnfläche des Innenrings übergreifende Bord (18) des Außenrings (12) des Nadellagers (10) an seinem Innenrand eine axiale, gegen den Innenring (38) des Wälzlagers (33) gerichtete Kröpfung oder Ausstülpung (20) hat, deren radial verlaufende ebene Stirnfläche (21) zum Anlauf gegen den Innenring (38) des Wälzlagers (33) vorgesehen ist.

## Claims

1. Pump unit (25,) in particular for slip-controlled hydraulic vehicle brake systems, having a radial piston pump (26) with at least one pump piston (47) in a pump block (27), having a drive motor (29) fitted on the pump block (27), and having a shaft (30) which can be driven by the drive motor (29), engages at least indirectly through an inner race (38) of a rolling-contact bearing (33) and, immediately adjacent to the latter, bears a needle bearing (10), which has an inner race (11), designed as an eccentric sleeve, and an outer race (12) in the form of a needle bush as well as needles (14) between the inner race (11) and outer race (12), the outer race (12) being provided, on each of its two end sides, with a radially inwardly directed rim (17, 18), of which one is provided for acting on the inner race (38) of the rolling-contact bearing (33), while the pump piston (47) of the radial piston pump (26) acts on the casing of the outer race (12) of the needle bearing (10), **characterized in that** the inner race (11) of the needle bearing (10) and likewise the inner race (38) of the rolling-contact bearing (33) are pressed onto the shaft (30), and **in that** it is only the rim (18) of the outer race (12) of the needle bearing (10), said rim being provided for acting on the inner race (38) of the rolling-contact bearing (33), which engages over an end surface (19) of the inner race (11), for the purpose of securing the axial position of needles (14) and outer race (12), said rim (18) engaging in a gap between the inner race (11, 38) of the needle bearing (10) and rolling-contact bearing (33).

2. Pump unit according to Claim 1, **characterized in that**, on its inner border, the rim (18) of the outer race (12) of the needle bearing (10), said rim engaging over the end surface of the inner race, has an axial angled portion or protuberance (20) which is directed towards the inner race (38) of the rolling-contact bearing (33) and of which the radially running planar end surface (21) is provided for running up against the inner race (38) of the rolling-contact bearing (33).

## Revendications

1. Unité de pompe (25), notamment pour des systèmes de freinage de véhicules hydraulique avec régulation de patinage, comprenant une pompe à pistons radiaux (26) avec au moins un piston de pompe (47) dans un bloc pompe (27), comprenant un moteur d'entraînement (29) annexé au bloc pompe (27), comprenant un arbre (30) que le moteur d'entraînement (29) peut actionner, cet arbre agissant au moins indirectement sur la bague intérieure (38) d'un palier à roulement (33) et au voisinage immédiat duquel il porte un roulement à aiguilles (10), qui présente une bague intérieure (11) formée d'un manchon excentrique et une bague extérieure (12) en forme de douille à aiguilles, ainsi que des aiguilles (14) entre la bague intérieure (11) et la bague extérieure (12), où la bague extérieure (12) est équipée sur chacune de ses deux faces d'un rebord tourné vers l'intérieur de façon radiale (17,18), dont l'un est prévu pour attaquer la bague intérieure (38) du palier à roulement (33), pendant que le piston de pompe (47) de la pompe à pistons radiaux (26) attaque la gaine de la bague extérieure (12) du roulement à aiguilles (10),
**caractérisée en ce que**
la bague intérieure (11) du roulement à aiguilles (10) ainsi que la bague intérieure (38) du palier à roulement (33) sont emmanchées sur l'arbre (30), et seulement le rebord (18) de la bague extérieure (12) du roulement à aiguilles (10) destiné à assurer la position axiale des aiguilles (14) et de la bague extérieure (12) par l'intermédiaire d'une face (19) de la bague intérieure (11), prévu pour attaquer la bague intérieure (38) du palier à roulement (33), s'insère dans l'espace entre les bagues intérieures (11, 38) du roulement à aiguilles et du palier à roulement (33).

2. Unité de pompe d'après la revendication 1,
**caractérisée en ce que**
le rebord (18) de la bague extérieure (12) du roulement à billes (10) recouvrant les faces de la bague intérieure possède sur sa bordure intérieure un coude ou une excroissance (20) axial dirigé(e) vers la bague intérieure (38) du palier à roulement (33), dont la face (21) orientée de façon radiale est prévue pour glisser contre la bague intérieure (38) du palier à roulement (33).
